# EUROPÄISCHE PATENTSCHRIFT

(11) **EP 4 139 594 B1**
(45) Veröffentlichungstag und Bekanntmachung des Hinweises auf die Patenterteilung: **21.05.2025**
(21) Anmeldenummer: 21730512.7
(22) Anmeldetag: 28.05.2021
(51) Int. Cl.: F16K 11/07

(54) **VENTILVORRICHTUNG**
VALVE DEVICE
SYSTÈME DE CLAPET

(30) Priorität: 02.07.2020 DE 102020003973
(43) Veröffentlichungstag der Anmeldung: 01.03.2023
(73) Patentinhaber: Hydac Fluidtechnik GmbH, 66280 Sulzbach/Saar (DE)
(72) Erfinder: SCHNEIDER, Wolfgang Friedrich Wilhelm, 3600 Thun (CH); TANNER, Roger Daniel, 3097 Liebefeld (CH); STAMBER-BUR, Marcel, 66271 Kleinblittersdorf (DE)
(74) Vertreter: Bartels und Partner, Patentanwälte
(86) Internationale Anmeldenummer: PCT/EP2021/064339
(87) Internationale Veröffentlichungsnummer: WO 2022/002501

(56) Entgegenhaltungen:
- GB-A- 1 098 310
- US-A- 3 790 125

## Beschreibung

Die Erfindung betrifft eine Ventilvorrichtung mit den Merkmalen im Oberbegriff von Anspruch 1.

DE 196 17 849 A1 offenbart eine Vorrichtung zum Klemmen eines Kolbens eines Wegeventils in seiner jeweiligen Einstellposition. Die Vorrichtung weist ein Ventilgehäuse auf, in dem der Kolben axial verschiebbar angeordnet ist. An den axialen Enden des Ventilgehäuses ist jeweils eine Klemmeinrichtung vorgesehen. An das jeweilige axiale Ende des Ventilkolbens schließt sich jeweils ein angesetztes Kolbenteil an, dessen Querschnitt sich in Richtung seines freien Endes konisch erweitert und der jeweils von einem Käfig der Klemmeinrichtung umfasst ist. Der Käfig ist mit Ausnehmungen versehen, in die Klemmkörper in Form von Kugeln eingesetzt sind, die in Radialrichtung zwischen dem Kolbenteil an dem Ventilkolben und dem Ventilgehäuse angeordnet sind. Wenn der Ventilkolben aufgrund von Strömungskräften eine Bewegung entgegen der Schaltrichtung auszuführen sucht, setzt die Klemmwirkung der Klemmeinrichtung ein. Dabei werden die Kugeln durch den jeweiligen Kolbenteil radial gegen eine im Ventilgehäuse fest eingebaute Hülse gedrückt, wodurch der Ventilkolben reibungsunterstützt formschlüssig axial gehalten wird. Wenn der Ventilkolben in seine andere Schaltstellung gebracht werden soll, wirkt eine Magnetbetätigungseinrichtung mit ihrem Stößel auf den Käfig ein, wodurch der Käfig in Richtung des Ventilkolbens derart verfahren wird, dass zunächst die reibungsunterstützt formschlüssige Halterung des Ventilkolbens durch Lösen der geklemmten Kugeln gelöst wird und darauffolgend nach einer kurzen Verfahrstrecke des Käfigs der Käfig den Ventilkolben in seine andere Schaltstellung mitnimmt.

Bei der Verfahrbewegung des Käfigs nimmt dieser die Kugeln mit und die Kugeln nehmen dabei entlang der Konusführung, die durch das angesetzte Kolbenteil gebildet ist, verschiedene axiale und radiale Stellungen ein. Die reibungsunterstützt formschlüssig erreichte Positionierung des Ventilkolbens entspricht keiner exakt vorgebbaren Verfahrstellung des Ventilkolbens, insbesondere im Hinblick auf seine einzunehmenden Endstellungen, sondern es ist vielmehr jede Verfahrstellung des Ventilkolbens als "gehalten" anzusehen, in der ein ungewolltes Umschalten des Ventilkolbens mittels der Kugeln verhindert ist. So erhöht sich die Klemmkraftwirkung beim Halten des Ventilkolbens bei einer ungewollten Verfahrbewegung entgegen der Betätigungsrichtung und eine nachfolgende Betätigung wird dadurch erschwert.

DE 20 2006 014 780 U1 offenbart ein Pneumatik-Ventil zum Beherrschen von Luftströmen mit geringen Einsatzdrücken, mit einem linear verschiebbar in einem Ventilgehäuse angeordneten Ventilschieber und mit Haltemitteln zur lösbaren gehäusefesten Fixierung des Ventilschiebers in zwei durch das lineare Verschieben erreichten Schaltstellungen. Die Haltemittel weisen zumindest auf: einen den Ventilschieber querdurchsetzenden Aufnahmekanal, der mit zwei einander entgegengesetzten Kanalmündungen zum Außenumfang des Ventilschiebers ausmündet; zwei im Bereich der beiden Kanalmündungen in dem Aufnahmekanal angeordnete, in Längsrichtung des Aufnahmekanals im Wesentlichen unabhängig voneinander relativ zum Ventilschieber bewegliche Rastglieder in Form von Kugeln; eine in dem Aufnahmekanal zwischen den beiden Rastgliedern angeordnete und die beiden Rastglieder im Sinne eines Auseinanderhaltens beaufschlagende Druckfedereinrichtung; und zwei in Richtung der linearen Verschiebebewegung des Ventilschiebers bezüglich des Ventilgehäuses ortsfeste Rastvertiefungsanordnungen, jeweils in Form einer zum Ventilschieber koaxialen Ringnut, die an einer der zu fixierenden Schaltstellung entsprechenden Position im Bereich des Außenumfanges des Ventilschiebers angeordnet ist und mit der die beiden Rastglieder bei Erreichen der zu fixierenden Schaltstellung in lösbaren Rasteingriff gelangen können. Die einzelnen Rastpositionen sind axial zur Längsachse des Ventilschiebers gesehen voneinander beabstandet, liegen jedoch auf einer gemeinsamen Umfangsebene bezogen auf die Längsachse, so dass die Rastkugelpaare entgegen der Federkraftwirkung aus der Rastposition bei Verschieben des Ventilschiebers herausgedrückt und nach Durchlaufen des axialen Verfahrweges federkraftbedingt in die neue Rastposition gelangen, die radial gesehen auf demselben Durchmesser liegt wie die erste Rastposition.

Ist eine der beiden Schaltstellungen erreicht, verharrt der Ventilschieber in der entsprechenden Position auch dann, wenn die ihn in diese Rastposition gebrachte Stellkraft entfernt wird, die von einer Vorsteuerventileinrichtung aufgebracht wird. Der Ventilschieber bleibt also ohne ständige Energiezufuhr von außen in der jeweiligen Schaltstellung bis er einen Umschaltimpuls erhält, wobei die in ihrer jeweiligen Raststellung federbelasteten Rastkugeln im Hinblick auf die relativ geringen Pneumatikkräfte am Ventilschieber ohne Weiteres verbleiben können.

Bei sehr hohen Fluidkräften wie sie regelmäßig in der Hydraulik auftreten, dürfte sich die bekannte Lösung demgemäß als wenig geeignet erweisen.

Die GB 1 098 310 beschreibt eine Ventilvorrichtung mit einem Ventilgehäuse und darin angeordneten Fluidanschlussstellen, die mittels eines entlang seiner Längsachse verschiebbaren Ventilkolbens in seinen verschiedenen Verfahrstellungen miteinander fluidführend verbunden oder voneinander getrennt sind, und mit mindestens einer Rasteinrichtung zum Verrasten des Ventilkolbens in mindestens einer seiner Verfahrstellungen, die fremdkraftbetätigt mit ihren einzelnen Rastmitteln voneinander räumlich verschiedene Raststellungen einnimmt, wobei bezogen auf die Längsachse des Ventilkolbens die einzelnen Rastmittel der Rasteinrichtung sowohl in axialer als auch in radialer Richtung in den einzelnen Raststellungen voneinander verschiedene Positionen einnehmen. US3790125 offenbart eine Ventilvorrichtung gemäß dem Oberbegriff des Anspruchs 1.

Der Erfindung liegt die Aufgabe zugrunde, eine Ventilvorrichtung mit einer funktionssicheren Verrastung ihres Ventilkolbens auszustatten, die auch für hohe Kräfte, wie sie regelmäßig in der Hydraulik auftreten, geeignet ist. Eine dahingehende Aufgabe löst eine Ventilvorrichtung mit den Merkmalen des Patentanspruches 1 in seiner Gesamtheit.

Gemäß dem Kennzeichen des Anspruchs 1, ist die erfindungsgemäße Ventilvorrichtung dadurch gekennzeichnet, dass auf gegenüberliegenden Seiten des Ventilkolbens je eine Rasteinrichtung mit den jeweils zuordenbaren Steuerkörpern angeordnet ist; und dass zum wechselweisen Betätigen der Rasteinrichtung eine Steuerstange als Teil eines Gestängetriebes den Ventilkolben durchgreift.

Es ist ferner vorgesehen, dass bezogen auf die Längsachse des Ventilkolbens die einzelnen Rastmittel der Rasteinrichtung sowohl in axialer als auch in radialer Richtung in den einzelnen Raststellungen voneinander verschiedene Positionen einnehmen.

In erfindungsgemäßer Weise ist zunächst erkannt worden, dass die Rasteinrichtung sich widersprechende Funktionen zu erfüllen hat. So ist die Rasteinrichtung idealerweise derart auszulegen, dass diese einerseits den Ventilkolben, auf den je nach Verwendung der Ventilvorrichtung hohe Kräfte wirken, in seiner jeweiligen Raststellung sicher fixiert hält, wodurch einem ungewollten Verfahren des Ventilkolbens entgegengewirkt wird, und dass diese andererseits bei einem gewollten Betätigen des Ventiles nebst Verfahren des Ventilkolbens diesen ohne großen Kraftaufwand für seine Verfahrbewegung freigibt. Diesen Bedingungen tragen die Merkmale des Patentanspruchs 1 in seiner Gesamtheit Rechnung. Eine auf den Ventilkolben wirkende hohe Kraft kann beispielsweise eine Fluid- und/oder Federkraft sein.

So ist eine von dem Ventilkolben, auf den je nach Verwendung der Ventilvorrichtung hohe Kräfte wirken können, separate Rasteinrichtungvorgesehen, so dass die verrastete Festlegung des Ventilkolbens mittels einer Betätigungseinrichtung ohne gleichzeitiges Einwirken auf den Ventilkolben und ohne reibungsbasierendes Klemmen der Rastmittel in einer Art Vorsteuerung lösbar ist. Aufgrund dessen ist die von der Betätigungseinrichtung aufzubringende Betätigungskraft zum Lösen der Verrastung nicht direkt abhängig von der auf den Ventilkolben während des Betriebes der Ventilvorrichtung wirkenden Fluidkraft. Zudem ist im Zustand der verrasteten Festlegung des Ventilkolbens die von der Rasteinrichtung aufgebrachte Haltekraft vollkommen reibungsunabhängig. Dadurch kann zumindest bei auf den Ventilkolben einwirkenden hohen Kräften eine Betätigungseinrichtung gewählt werden, die weniger leistungsstark ist, als eine Betätigungseinrichtung, mittels der durch direkte Einwirkung auf den Ventilkolben die Verrastung zu lösen ist, was den Kostenaufwand für Energie und den Raumbedarf der Ventilvorrichtung reduzieren hilft. Im Ergebnis lässt sich dadurch der Einsatzbereich der erfindungsgemäßen Vorrichtung vergrößern. Da die Vorsteuerung und/oder die Haltewirkung jeweils zumindest teilweise ohne Federkraftunterstützung auskommen, insbesondere die Rastkugeln der Rasteinrichtung über eine Art Kulissenführung bezogen auf ihre Verfahrbewegungen angesteuert sind, ist die Betriebssicherheit erhöht, so dass die erfindungsgemäße Ventilvorrichtung auch besonders für sicherheitsrelevante Bereiche, wie Pressensteuerungen oder Betätigungseinrichtungen für Kraftwerksanlagen, einsetzbar ist.

Weitere Vorteile der erfindungsgemäßen Lösung sind Gegenstand der Unteransprüche.

Im Folgenden wird eine erfindungsgemäße Ventilvorrichtung anhand der Zeichnung näher erläutert. Dabei zeigen in prinzipieller und nicht maßgeblicher Darstellung die
- Fig. 1: einen schematisch vereinfachten Längsschnitt einer erfindungsgemäßen Ventilvorrichtung;

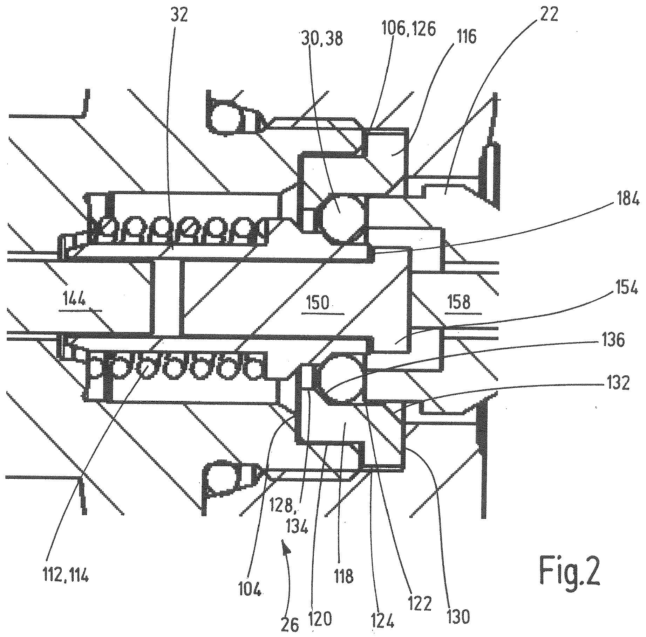

- Fig. 2: einen gegenüber Fig. 1 vergrößerten Teillängsschnitt der Ventilvorrichtung im Bereich ihrer einen Rasteinrichtung; und

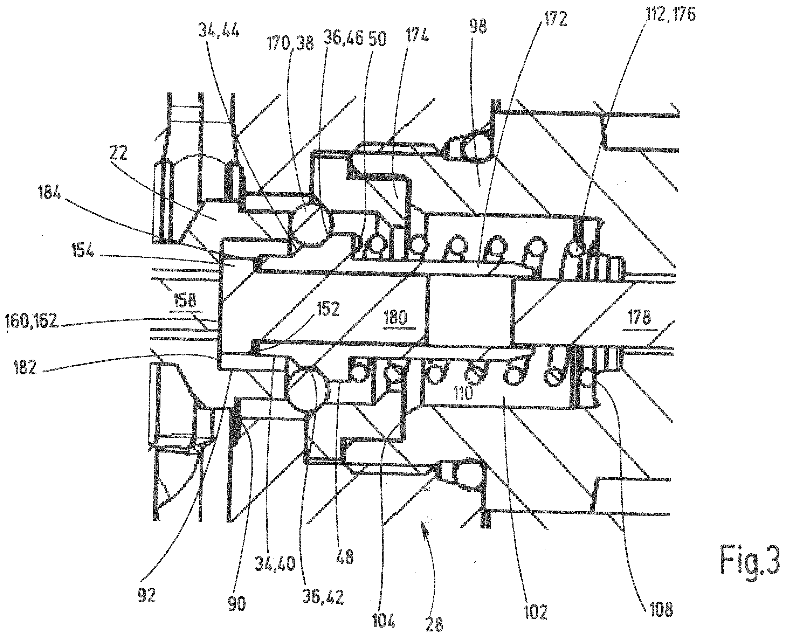

- Fig. 3: einen gegenüber Fig. 1 vergrößerten Teillängsschnitt der Ventilvorrichtung im Bereich ihrer anderen Rasteinrichtung.

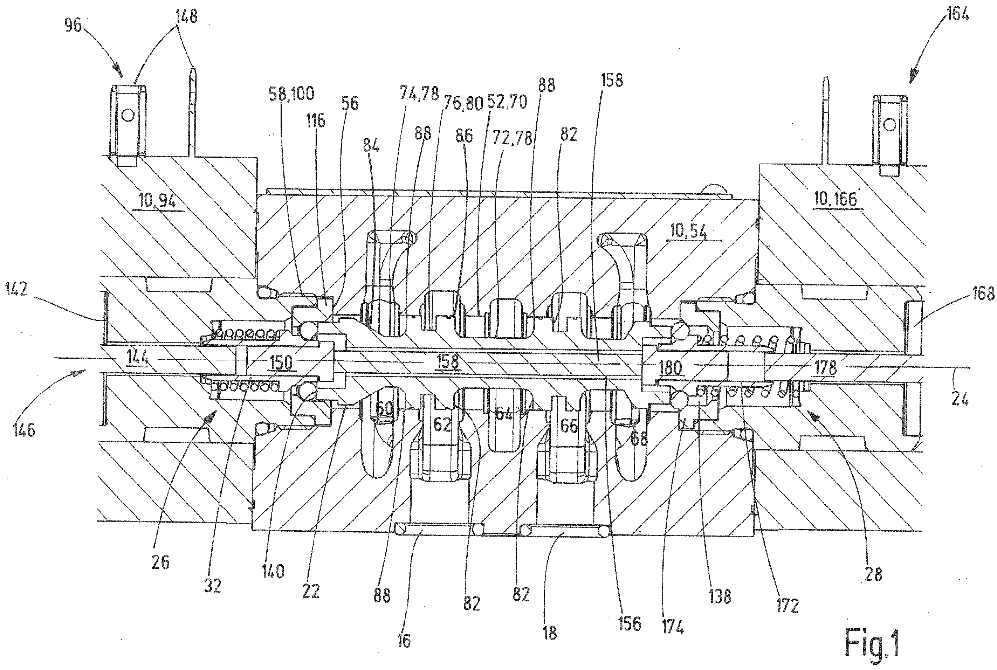

Fig.1 zeigt eine erfindungsgemäße Ventilvorrichtung mit einem Ventilgehäuse 10, 54, 94, 166 in dem Fluidanschlussstellen 16, 18 angeordnet sind. Die Fluidanschlussstellen 16, 18 sind mittels eines Ventilkolbens 22 der Ventilvorrichtung, der entlang einer Längsachse 24 des Ventilgehäuses 10, 54, 94, 166 fremdkraftbetätigt verschiebbar und somit in verschiedenen Verfahrstellungen anordenbar ist, je nach dessen Verfahrstellung miteinander fluidführend verbindbar oder voneinander trennbar.

Die Ventilvorrichtung weist zudem mindestens eine Rasteinrichtung 26, 28 mit einzelnen Rastmitteln 30, 38, 170 auf, die zum Verrasten des Ventilkolbens 22 in mindestens einer seiner Verfahrstellungen dient. Die jeweilige Rasteinrichtung 26, 28 ist derart eingerichtet, dass diese räumlich voneinander verschiedene Raststellungen einnehmen kann. In den einzelnen Raststellungen nehmen die einzelnen Rastmittel 30, 38, 170 der jeweiligen Rasteinrichtung 26, 28, bezogen auf die Längsachse 24 des Ventilkolbens 22, sowohl in axialer als auch in radialer Richtung voneinander verschiedene Positionen ein.

Es ist eine erste Rasteinrichtung 26 vorgesehen, die einen ersten rotationssymmetrischen Steuerkörper 32 aufweist, der zum Verfahren der Rastmittel 30, 38 der ersten Rasteinrichtung 26 in ihre voneinander verschiedenen Raststellungen dient. Der erste Steuerkörper 32 ist entlang der Längsachse 24 des Ventilkolbens 22 verfahrbar geführt und weist auf seiner Außenumfangsseite eine erste 34 und eine zweite 36 ringförmige Steuerfläche auf, die jeweils koaxial zur Längsachse 24 des Ventilkolbens 22 angeordnet ist. Jede Steuerfläche 34, 36 dient zum Ansteuern der Rastmittel 30 in Form von Kugeln 38 und weist jeweils einen parallel zur Längsachse 24 des Ventilkolbens 22 verlaufenden steigungsfreien Steuerflächenteil 40, 42 und eine Steuerrampe 44, 46 auf. Auch ist es denkbar, dass jede Steuerfläche 34, 36 ausschließlich aus jeweils einem parallel zur Längsachse 24 des Ventilkolbens 22 verlaufenden steigungsfreien Steuerflächenteil 40, 42 gebildet ist, wobei die Steuerflächen 34, 36 unter Ausbildung einer Stufe sprungförmig ineinander übergehen. Der radiale Abstand zwischen dem zweiten steigungsfreien Teil 42 der zweiten Steuerfläche 36 und der Längsachse 24 des Ventilkolbens 22 ist größer als der radiale Abstand zwischen dem ersten steigungsfreien Teil 40 der ersten Steuerfläche 34 und der Längsachse 24 des Ventilkolbens 22.

An dem dem Ventilkolben 22 zugewandten Ende der Umfangsseite des ersten Steuerkörpers 32 ist der erste steigungsfreie Teil 40 vorgesehen, von dem beabstandet, in Richtung der Längsachse 24 und von dem Ventilkolben 22 weg gerichtet, der zweite steigungsfreie Teil 42 angeordnet ist. Wiederum von dem zweiten steigungsfreien Teil 42 beabstandet, in Richtung der Längsachse 24 und von dem Ventilkolben 22 weg gerichtet, ist als Außenumfangsfläche des ersten Steuerkörpers 32 ein dritter steigungsfreier Teil 48 ausgebildet. Der radiale Abstand zwischen dem dritten steigungsfreien Teil 48 und der Längsachse 24 des Ventilkolbens 22 ist größer als der radiale Abstand zwischen dem zweiten steigungsfreien Teil 42 und der Längsachse 24 des Ventilkolbens 22.

Zwischen dem ersten 40 und dem zweiten 42 steigungsfreien Teil erstreckt sich die erste Steuerrampe 44 der ersten Steuerfläche, die ausgehend von dem ersten steigungsfreien Teil 40 eine lineare Steigung aufweist, und zwischen dem zweiten 42 und dem dritten 48 steigungsfreien Teil erstreckt sich die zweite Steuerrampe 46 der zweiten Steuerfläche 36, die ausgehend von dem zweiten steigungsfreien Teil 42 die lineare Steigung aufweist. Im Ergebnis weitet sich der erste Steuerkörper 32 ausgehend von dem dem Ventilkolben 22 zugewandten Ende in Richtung seines dem Ventilkolben 22 abgewandten Endes im Bereich der ersten 44 und der zweiten 46 Steuerrampe konisch auf. Ausgehend von dem dritten steigungsfreien Teil 48 in Richtung seines dem Ventilkolben 22 abgewandten Endes verringert sich der Außendurchmesser des ersten Steuerkörpers 32 unter Ausbildung einer Stufe 50 sprungartig auf den Durchmesser, der dessen Durchmesser im Bereich seines ersten steigungsfreien Teils 40 entspricht. An seinem dem Ventilkolben 22 abgewandten Endbereich läuft der erste Steuerkörper 32 in Richtung seines dem Ventilkolben 22 abgewandten Endes konisch zu.

Der Ventilkolben 22 ist in einem Durchgang 52 eines Hauptgehäuseteils 54 verschiebbar geführt, der in Richtung seines dem ersten Steuerkörper 32 zugewandten Endes unter Ausbildung einer Stufe 56 eine Innenumfangserweiterung 58 aufweist. In dem Bereich der Durchgangserweiterung 58 ist der Ventilkolben 22 von dem Innenumfang des Hauptgehäuseteils 54 beabstandet. Das Hauptgehäuseteil 54 weist einen in den Figuren nicht gezeigten Druckversorgungsanschluss, zwei Arbeitsanschlüsse 16, 18 und zwei in den Figuren nicht dargestellte Rücklaufanschlüsse auf. Von jeder dieser Fluidanschlussstellen 16, 18 ausgehend erstreckt sich jeweils ein Fluidkanal durch das Hauptgehäuseteil 54 zu dem Ventilkolben 22 hin und mündet in einem ersten 60, zweiten 62, dritten 64, vierten 66 und fünften 68 Steuerraum im Hauptgehäuseteil 54 aus. Im Konkreten ist der erste und der zweite Rücklauf- oder Tankanschluss mit dem ersten 60 bzw. dem fünften 68 Steuerraum, der erste 16 und der zweite 18 Arbeitsanschluss mit dem zweiten 62 bzw. dem vierten 66 Steuerraum und der Druckversorgungsanschluss mit dem dritten 64 Steuerraum fluidführend verbunden. Jeder Steuerraum 60, 62, 64, 66, 68 ist als Teil des Durchganges 52 durch das Ventilgehäuse 10, 54 koaxial zur Längsachse 24 des Ventilkolbens 22 angeordnet und weist einen gegenüber dem Innendurchmesser des Durchgangs 52 im Bereich von Führungsteilen 70 zum Führen des Ventilkolbens 22, die jeweils zwischen den benachbarten Steuerräumen 60, 62, 64, 66, 68 vorgesehen sind, größeren Innendurchmesser auf. So erstreckt sich der Ventilkolben 22 durch jeden der Steuerräume 60, 62, 64, 66, 68 hindurch.

Der Ventilkolben 22 weist in seinem Mittenbereich eine ringförmige Aussparung einer ersten Art 72 und im Mittenbereich seiner dem ersten Steuerkörper 32 zugewandten Hälfte eine ringförmige Aussparung einer zweiten Art 74 auf. Im Bereich zwischen der Aussparung der ersten 72 und der zweiten 74 Art weist der Ventilkolben 22 eine Aussparung einer dritten Art 76 auf.

Im Längsschnitt gesehen sind die Aussparungen der ersten 72 bis dritten 76 Art jeweils U- oder wannenförmig ausgebildet. So weist die jeweilige Aussparung 72, 74, 76 eine sich parallel zur Längsachse 24 des Ventilkolbens 22 erstreckende Grundseite 78, 80 auf. Die radialen Abstände zwischen der jeweiligen Grundseite 78 der Aussparung der ersten 72 und der zweiten 74 Art und der Längsachse 24 des Ventilkolbens 22 entsprechen sich. Der radiale Abstand der Grundseite 80 der Aussparung der dritten 76 Art ist demgegenüber größer ausgebildet. Von den Enden der Grundseite 78, 80 der Aussparung der ersten 72 und dritten 76 Art und dem dem ersten Steuerkörper 32 abgewandten Ende der Grundseite 78 der Aussparung der zweiten 74 Art erstreckt sich jeweils in Radialrichtung nach außen ein Seitenwandteil 82 weg. Von dem dem ersten Steuerkörper 32 zugewandten Ende der Grundseite 78 der Aussparung der zweiten Art 74 erstreckt sich ein in Axial- und gleichzeitig in Radialrichtung schräg verlaufendes Seitenwandteil 84 nach außen weg. Im Bereich zwischen benachbarten Aussparungen 72, 74, 76 weist der Ventilkolben 22 seinen größten Außendurchmesser auf.

Der Übergang des Seitenwandteils 82 der Aussparung der ersten Art 72, das sich von dem dem ersten Steuerkörper 32 zugewandten Ende der Grundseite 78 wegerstreckt, zum vollen, also größten, Außendurchmesser des Ventilkolbens 22 bildet eine erste Steuerkante 86 aus. Der Übergang des jeweiligen Seitenwandteils 82 der Aussparung der ersten und der zweiten Art, das sich von dem dem ersten Steuerkörper 32 abgewandten Ende der Grundseite 78 wegerstreckt, zum vollen Außendurchmesser des Ventilkolbens 22 bildet jeweils eine zweite Steuerkante 88 der jeweiligen Aussparung 72, 74 aus.

Ausgehend von dem Übergang des Seitenwandteils 84 der Aussparung der zweiten Art 74, das sich von dem dem ersten Steuerkörper 32 zugewandten Ende der Grundseite 78 wegerstreckt, zum Außendurchmesser des Ventilkolbens 22 in Richtung des dem ersten Steuerkörper 32 zugewandten Endes des Ventilkolbens 22 verläuft der Außendurchmesser des Ventilkolbens 22 zunächst mit einem Durchmesser, der größer und geringer ist als der kleinste bzw. der größte Außendurchmesser des Ventilkolbens 22, woraufhin der Außendurchmesser unter Ausbildung einer Stufe 90 verringert ist, der größer ist als der kleinste Außendurchmesser des Ventilkolbens 22. In die dem ersten Steuerkörper 32 zugewandte Stirnseite 140 des Ventilkolbens 22 ist eine zylindrische Ausnehmung 92 eingebracht, deren Innendurchmesser kleiner und größer ist als der Außendurchmesser des ersten Steuerkörpers 32 im Bereich des dritten 48 bzw. zweiten 42 steigungsfreien Teils.

An das Hauptgehäuseteil 54 schließt sich auf der dem ersten Steuerkörper 32 zugewandten Seite des Hauptgehäuseteils 54 ein Gehäuse 94 einer ersten Betätigungseinrichtung 96 an. Das Gehäuse 94 der ersten Betätigungseinrichtung 96 weist an seiner dem Hauptgehäuseteil 54 zugewandten Seite einen zylindrischen Fortsatz 98 auf, der sich in Richtung des Hauptgehäuseteiles 54 erstreckt und im Wesentlichen einen Außenumfang entsprechend dem Innenumfang der Durchgangserweiterung 58 des Hauptgehäuseteils 54 aufweist. Über eine Gewindestrecke 100 zwischen dem Außenumfang des zylindrischen Fortsatzes 98 des Gehäuses 94 der ersten Betätigungseinrichtung 96 und der Durchgangserweiterung 58 des Hauptgehäuseteils 54 ist das Gehäuse 94 der ersten Betätigungseinrichtung 96 an dem Hauptgehäuseteil 54 festgelegt. Ausgehend von der dem Hauptgehäuseteil 54 zugewandten Stirnseite des Fortsatzes 98 des Gehäuses 94 der ersten Betätigungseinrichtung 96 ist in den Fortsatz 98 eine zylindrische Ausnehmung 102 eingebracht, die sich koaxial zur Längsachse 24 des Ventilkolbens 22 erstreckt. Der Innendurchmesser der zylindrischen Ausnehmung 102 verringert sich unter Ausbildung einer Stufe 104 ausgehend von der dem Ventilkolben 22 zugewandten Öffnung 106 der Ausnehmung 102 in Richtung ihres geschlossenen Bodens 108.

In einem Raum 110, der durch die Ausnehmung 102 des Gehäuses 94 der ersten Betätigungseinrichtung 96 und durch die Durchgangserweiterung 58 des Hauptgehäuseteils 54 gebildet ist, ist der erste Steuerkörper 32 angeordnet. In diesem Raum 110 erfährt der erste Steuerkörper 32 unter der Wirkung eines Energiespeichers 112 in Form einer ersten Druckfeder 114 eine Vorspannung in Richtung des Ventilkolbens 22. Die erste Druckfeder 114 stützt sich mit ihrem einen Ende an der Stufe 50 des ersten Steuerkörpers 32 und mit ihrem anderen Ende an dem Boden 108 der zylindrischen Ausnehmung 102 des Fortsatzes 98 ab.

Der erste Steuerkörper 32 ist über die kugelförmigen Rastmittel 30, 38 in einem ringförmigen zweiten Steuerkörper 116 geführt, der in dem Raum zwischen dem Fortsatz 98 des Gehäuses 94 der ersten Betätigungseinrichtung 96 und dem Hauptgehäuseteil 54 festgelegt ist. Der zweite Steuerkörper 116 ist koaxial zu der Längsachse 24 des Ventilkolbens 22 ausgerichtet und im Längsschnitt im Wesentlichen Z-förmig ausgebildet.

Der zweite Steuerkörper 116 weist im Längsschnitt ein quaderförmiges Basisteil 118 auf, das mit seinen Längsseiten 120, 122 in Richtung der Längsachse 24 des Ventilkolbens 22 ausgerichtet ist. Die der Längsachse 24 des Ventilkolbens 22 abgewandte Längsseite 120 des Basisteils 118 ist in Anlage an dem Innenumfang der Ausnehmung 102 des Gehäuses 94 der ersten Betätigungseinrichtung 96 im Bereich ihres größten Innendurchmessers. Von dem dem Ventilkolben 22 zugewandten Endbereich der der Längsachse 24 des Ventilkolbens 22 abgewandten Längsseite 120 des Basisteils 118 erstreckt sich ein erster, im Längsschnitt quaderförmiger Vorsprung 124 radial nach außen weg. Der Innendurchmesser des zweiten Steuerkörpers 116 im Bereich seines Basisteils 118 ist geringfügig größer als der Außendurchmesser des im Außendurchmesser verringerten Endbereichs des Ventilkolbens 22, die jeweils kleiner sind als der kleinste Innendurchmesser des Durchgangs 52 des Hauptgehäuseteils 54. Der im Außendurchmesser verringerte Endbereich des Ventilkolbens 22 ist in Radialrichtung von dem zweiten Steuerkörper 116 geringfügig beabstandet, in Axialrichtung in den zweiten Steuerkörper 116 einfahrbar. Der erste Vorsprung 124 ist auf seiner einen Seite in Anlage mit der Stirnseite 126 des Fortsatzes 98 des Gehäuses 94 der ersten Betätigungseinrichtung 96 und auf seiner anderen Seite in Anlage mit der Stufe 56 des Durchgangs 52 des Hauptgehäuseteils 54. Von dem dem Ventilkolben 22 abgewandten Endbereich der der Längsachse 24 des Ventilkolbens 22 zugewandten Längsseite 122 des Basisteils 118 erstreckt sich ein zweiter Vorsprung 128 radial nach innen weg. Die der ersten Betätigungseinrichtung 96 zugewandte Seite des Basisteils 118 ist in Anlage mit der Stufe 104 der Ausnehmung 102 des Fortsatzes 98 des Gehäuses 94 der ersten Betätigungseinrichtung 96. Der Innendurchmesser des zweiten Steuerkörpers 116 im Bereich seines zweiten Vorsprungs 128 ist geringer als der geringste Innendurchmesser der Ausnehmung 102 des Gehäuses 94 der ersten Betätigungseinrichtung 96.

Ausgehend von der der Längsachse 24 zugewandten Seite 122 des Basisteils 118 des zweiten Steuerkörpers 116 zu der dem Ventilkolben 22 zugewandten Stirnseite 130 des Basisteils 118 erstreckt sich schräg von der Längsachse 24 des Ventilkolbens 22 nach außen weg verlaufend, eine erste Anschlagfläche 132 für die Rastmittel 30, 38. Ausgehend von der der Längsachse 24 zugewandten Seite 134 des zweiten Vorsprungs 128 des zweiten Steuerkörpers 116 zu der der Längsachse 24 des Ventilkolbens 22 zugewandten Seite 122 des Basisteils 118 erstreckt sich schräg von der Längsachse 24 des Ventilkolbens 22 nach außen weg verlaufend, eine zweite Anschlagfläche 136 für die Rastmittel 30, 38. Derart ausgebildet weisen die beiden Anschlagflächen 132, 136 einen unterschiedlichen radialen Abstand zur Längsachse 24 des Ventilkolbens 22 auf. Die beiden Anschlagflächen 132, 136 bilden mit den Steuerflächen 34, 36 des ersten Steuerkörpers 32 die einzelnen radial und axial voneinander beabstandeten Raststellungen aus.

Der erste 32 und der zweite 116 Steuerkörper begrenzen miteinander einen spaltförmigen Raum 138 insbesondere in Form eines Ringraumes, in dem jedes Rastmittel 30 in Form der Kugel 38 auf einem freien Weg von ihrer einen in die andere Raststellung geführt ist, die über den freien Weg axial voneinander separiert sind. In der der ersten Betätigungseinrichtung 96 nächstliegenden Raststellung ist die jeweilige Kugel 38 zwischen der ersten Steuerfläche 34 des ersten Steuerkörpers 32, der zweiten Anschlagfläche 136, der der Längsachse 24 des Ventilkolbens 22 zugewandten Längsseite 122 des Basisteils 118 des zweiten Steuerkörpers 116 und der dem ersten Steuerkörper 32 zugewandten ringförmigen Stirnseite 140 des Ventilkolbens 22 angeordnet. In der der ersten Betätigungseinrichtung 96 entferntestliegenden Raststellung ist die jeweilige Kugel 38 zwischen der zweiten Steuerfläche 36 des ersten Steuerkörpers 32, der ersten Anschlagfläche 132 und der dem ersten Steuerkörper 32 zugewandten ringförmigen Stirnseite 140 des Ventilkolbens 22 angeordnet. Die Wegstrecke zwischen den Raststellungen ist derart gewählt, dass der Ventilkolben 22 bei einem Verfahren dieser Strecke von einer aktuellen Verfahrstellung, in der der eine Arbeitsanschluss 16, 18 mittels des Druckversorgungsanschlusses mit Druckfluid versorgt und der andere Arbeitsanschluss 18,16 von dem Druckversorgungsanschluss getrennt ist, in eine andere Verfahrstellung gelangt, in der der andere Arbeitsanschluss 18, 16 mittels des Druckversorgungsanschlusses mit Druckfluid versorgt und der eine Arbeitsanschluss 16, 18 von dem Druckversorgungsanschluss getrennt ist.

Die erste Betätigungseinrichtung 96 weist einen bestrombaren, ersten Betätigungsmagneten 142 auf, der auf eine erste Betätigungsstange 144 eines mehrteiligen Gestängetriebes 146 einwirkt. Auf der Oberseite des Gehäuses 94 der ersten Betätigungseinrichtung 96 sind mit dem Betätigungsmagneten 142 elektrisch verbundene Steckerteile 148 vorgesehen, über die der Betätigungsmagnet 142 bestrombar ist. Die erste Betätigungsstange 144 erstreckt sich von der dem Ventilkolben 22 abgewandten Seite des ersten Steuerkörpers 32 aus in den als Hohlkörper ausgebildeten ersten Steuerkörper 32 hinein, der auf der Betätigungsstange 144 geführt ist. In dem ersten Steuerkörper 32 ist ein rotationssymmetrisches erstes Gestängeteil 150 geführt, das außenumfangsseitig an seinem dem Ventilkolben 22 zugewandten Endbereich unter Ausbildung einer Stufe 152 mit einer vollumfänglichen scheibenförmigen Verbreiterung 154 versehen ist, die in Richtung des Ventilkolbens 22 aus dem ersten Steuerkörper 32 hervorragt. Die Verbreiterung 154 weist einen größeren und kleineren Außendurchmesser auf als der Innendurchmesser des ersten Steuerkörpers 32 bzw. als der erste Steuerkörper 32 im Bereich des ersten steigungsfreien Teils 40 der ersten Steuerfläche 34. Der Ventilkolben 22 weist eine zentrale Durchgangsbohrung 156 auf, in der eine Steuerstange 158 als Teil des Gestängetriebes 146 geführt ist, zwischen der und dem ersten Steuerkörper 32 der erste Gestängeteil 150 angeordnet ist. Aufgrund der Vorspannung des ersten Steuerkörpers 32 mittels der Druckfeder 114 ist die dem Ventilkolben 22 zugewandte Stirnseite 184 des ersten Steuerkörpers 32 in Anlage mit der Stufe 152 des ersten Gestängeteils 150 und dessen dem Ventilkolben 22 zugewandte Stirnseite 160 in Anlage mit der dem ersten Steuerkörper 32 zugewandten Stirnseite 162 der Steuerstange 158.

Bei einer Anordnung des Ventilkolbens 22 in seiner Mittelstellung entspricht die andere, dem ersten Steuerkörper 32 abgewandte Hälfte der Ventilvorrichtung an einer Ebene, die senkrecht zur Längsachse 24 des Ventilkolbens 22 angeordnet ist und den dritten Steuerraum 64 sowie den Ventilkolben 22 mittig schneidet, gespiegelt der voranstehend beschriebenen, den ersten Steuerkörper 32 aufweisenden Hälfte der Ventilvorrichtung, so dass auf gegenüberliegenden Seiten des Ventilkolbens 22 jeweils eine Rasteinrichtung 26, 28, nämlich die erste 26 und eine zweite 28 Rasteinrichtung angeordnet ist.

So weist die andere Hälfte der Ventilvorrichtung die zweite Rasteinrichtung 28, eine zweite Betätigungseinrichtung 164 und weitere Teile des Gestängetriebes 146 auf. Die zweite Betätigungseinrichtung 164 weist ein zweites Gehäuse 166 und einen zweiten Betätigungsmagneten 168 auf. Die zweite Rasteinrichtung 28 weist zweite Rastmittel 170, einen dritten 172 und vierten 174 Steuerkörper und eine zweite Druckfeder 176 auf. Die der anderen Hälfte zugeordneten Teile des Gestängetriebes 146 weisen eine zweite Betätigungsstange 178 und ein zweites Gestängeteil 180 auf. Sollten (Teil-)Komponenten der zweiten Rasteinrichtung 28 in der Beschreibung nicht mit sich von den baugleichen (Teil-)Komponenten der ersten Rasteinrichtung 26 unterscheidenden Bezugszeichen beziffert sein, gelten für die zweite Rasteinrichtung 28 die Bezugszeichen der ersten Rasteinrichtung 26 gleichermaßen.

In jeder der gegenüberliegenden Endstellungen des längsverfahrbaren Ventilkolbens 22, greifen die beiden Rasteinrichtungen 26, 28, die ansonsten den Ventilkolben 22 für seine Verfahrbewegungen zwischen den Endstellungen freigeben.

Aufgrund der Bewegung der Rastmittel beim Entsperrvorgang kann zwischen den mit den Rastelmitteln in Kontakt kommenden Komponenten der Ventilvorrichtung und den Rastmitteln Reibung entstehen. Daher können die mit den Rastmitteln in Kontakt kommenden Komponenten der Ventilvorrichtung reibungsarme Oberflächen aufweisen oder mit reibungsarmen Materialien beschichtet sein, wodurch eine dauerhaft leichte und verschleißarme Betätigung der jeweiligen Rasteinrichtung ohne jedwede Einbuße der Betriebssicherheit gewährleistet ist.

Im Folgenden wird die Funktion der erfindungsgemäßen Ventilvorrichtung näher beschrieben:
In der in Fig. 1 gezeigten Raststellung sind die Kugeln 38 der ersten Rasteinrichtung 26 zwischen der ersten Steuerfläche 34 des ersten Steuerkörpers 32, der zweiten Anschlagfläche 136 und der der Längsachse 24 des Ventilkolbens 22 zugewandten Seite 122 des Basisteils 118 des zweiten Steuerkörpers 116 sowie der dem ersten Steuerkörper 32 zugewandten ringförmigen Stirnseite 140 des Ventilkolbens 22 angeordnet. Zudem sind die Kugeln 38 der zweiten Rasteinrichtung 28 in der einen Raststellung zwischen der zweiten Steuerfläche 36 des dritten Steuerkörpers 172, der ersten Anschlagfläche 132 des vierten Steuerkörpers 174 sowie der dem dritten Steuerkörper 172 zugewandten ringförmigen Stirnseite 140 des Ventilkolbens 22 angeordnet.

Dabei ist der dritte Steuerkörper 172 mittels der zweiten Druckfeder 176 in Richtung der ersten Betätigungseinrichtung 96 vorgespannt und das zweite Gestängeteil 180 mit der Stirnseite 160 seiner Verbreiterung 154 in Anlage mit dem Boden 182 der stirnseitigen Ausnehmung 92 des Ventilkolbens 22 und der Stirnseite 162 der Steuerstange 158, die jeweils der zweiten Betätigungseinrichtung 164 zugewandt sind und bündig miteinander abschließen. Weil die Steuerstange 158 länger ist als die Durchgangsbohrung 156 des Ventilkolbens 22 zwischen den beiden Böden 182 seiner stirnseitigen Ausnehmungen 92, ragt die Steuerstange 158 in Richtung der ersten Betätigungseinrichtung 96 über den Boden 182 der der ersten Betätigungseinrichtung 96 zugewandten Ausnehmung 92 des Ventilkolbens 22 hervor in diese Ausnehmung 92 hinein. Die der ersten Betätigungseinrichtung 96 zugewandte Stirnseite 162 der Steuerstange 158 ist in Anlage mit der der zweiten Betätigungseinrichtung 164 zugewandten Stirnseite 160 der Verbreiterung 154 des ersten Gestängeteils 150, das mit seiner Stufe 152 in Anlage mit der der zweiten Betätigungseinrichtung 164 zugewandten Stirnseite 184 des ersten Steuerkörpers 32 ist. Der erste Steuerkörper 32 ist in Richtung der zweiten Betätigungseinrichtung 164 mittels der ersten Druckfeder 114 vorgespannt.

Dadurch ist der Ventilkolben 22, der beidseitig in Anlage mit den Rastkugeln 38 ist, in seiner der ersten Betätigungseinrichtung 96 nächstliegenden, einen Raststellung angeordnet. Bei dieser Anordnung überdeckt der Ventilkolben 22 mit seinen Steuerkanten 86, 88 die Steuerräume 60 bis 68 im Ventilgehäuse 10, 54 derart, dass der Druckversorgungsanschluss mit dem ersten Arbeitsanschluss 16 fluidführend verbunden und von allen anderen Fluidanschlüssen 18 getrennt ist und gleichzeitig der zweite Arbeitsanschluss 18 mit dem zweiten Rücklaufanschluss fluidführend verbunden und von allen anderen Fluidanschlüssen 16 getrennt ist.

Soll der Ventilkolben 22 ausgehend von der in Fig. 1 gezeigten einen Raststellung in seine andere Raststellung gebracht werden, wird der Betätigungsmagnet 142 der ersten Betätigungseinrichtung 96 bestromt, der auf die erste Betätigungsstange 144 einwirkt und in Richtung der zweiten Betätigungseinrichtung 164 ausfährt. Dabei wirkt die Betätigungsstange 144 auf das erste Gestängeteil 150 ein, dessen Verbreiterung 154 in Richtung der zweiten Betätigungseinrichtung 164 von der der zweiten Betätigungseinrichtung 164 zugewandten Stirnseite 184 des ersten Steuerkörpers 32 abhebt und auf die Steuerstange 158 einwirkt. Dadurch wird die Steuerstange 158 in Richtung der zweiten Betätigungseinrichtung 164 gegenüber dem Ventilkolben 22 verfahren bis die der zweiten Betätigungseinrichtung 164 zugewandte Stirnseite 160 der Verbreiterung 154 des ersten Gestängeteils 150 in Anlage gelangt mit dem Boden 182 der der ersten Betätigungseinrichtung 96 zugewandten stirnseitigen Ausnehmung 92 des Ventilkolbens 22.

Nach in Anlage gelangen der der zweiten Betätigungseinrichtung 164 zugewandten Stirnseite 160 der Verbreiterung 154 des ersten Gestängeteils 150 wird der Ventilkolben 22 zusammen mit der Steuerstange 158 in Richtung der zweiten Betätigungseinrichtung 164 verfahren. Von der Steuerstange 158 beaufschlagt hebt die der ersten Betätigungseinrichtung 96 zugewandte Stirnseite 160 der Verbreiterung 154 des zweiten Gestängeteils 180 von dem Boden 182 der der zweiten Betätigungseinrichtung 164 zugewandten stirnseitigen Ausnehmung 92 des Ventilkolbens 22 ab, wobei das zweite Gestängeteil 180 mit seiner Stufe 152 in Anlage mit der Stirnseite 184 des dritten Steuerkörpers 172 gelangt und den dritten Steuerkörper 172 entgegen der Wirkung der zweiten Druckfeder 176 in Richtung der zweiten Betätigungseinrichtung 164 mitnimmt.

Bei dieser Verfahrbewegung ändern die Kugeln 38 der jeweiligen Rasteinrichtung 26, 28 auf ihrem freien Weg von der einen Raststellung in die andere Raststellung ihre Position in Axial- und Radialrichtung.

So sind die Kugeln 38 der ersten Rasteinrichtung 26 in der anderen Raststellung zwischen der zweiten Steuerfläche 36 des ersten Steuerkörpers 32, der ersten Anschlagfläche 132 des zweiten Steuerkörpers 116 sowie der dem ersten Steuerkörper 32 zugewandten ringförmigen Stirnseite 140 des Ventilkolbens 22 angeordnet. Zudem sind die Kugeln 38 der zweiten Rasteinrichtung 28 in der anderen Raststellung zwischen der ersten Steuerfläche 34 des dritten Steuerkörpers 172, der zweiten Anschlagfläche 136 und der der Längsachse 24 des Ventilkolbens 22 zugewandten Seite 122 des Basisteils 118 des vierten Steuerkörpers 174 sowie der dem dritten Steuerkörper 172 zugewandten ringförmigen Stirnseite 140 des Ventilkolbens 22 angeordnet.

In der anderen Raststellung ist der Ventilkolben 22, der beidseitig in Anlage mit den Rastkugeln 38 ist, in seiner der zweiten Betätigungseinrichtung 164 nächstliegenden Raststellung angeordnet. Auch ist es denkbar, dass der Ventilkolben 22 zumindest einseitig mit einer seiner Stufen 90 an einer Komponente der Ventilvorrichtung in Sinne eines Anschlages in Anlage ist, insbesondere an dem zweiten 116 bzw. vierten 174 Steuerkörper. Bei dieser Anordnung überdeckt der Ventilkolben 22 mit seinen Steuerkanten 86, 88 die Steuerräume 60 bis 68 im Ventilgehäuse 10, 54 derart, dass der Druckversorgungsanschluss mit dem zweiten Arbeitsanschluss 18 fluidführend verbunden und von allen anderen Fluidanschlüssen 16 getrennt ist und gleichzeitig der erste Arbeitsanschluss 16 mit dem ersten Rücklaufanschluss fluidführend verbunden und von allen anderen Fluidanschlüssen 18 getrennt ist.

Soll der Ventilkolben 22 ausgehend von der anderen Raststellung in seine in Fig. 1 gezeigte eine Raststellung gebracht werden, wird der Betätigungsmagnet 168 der zweiten Betätigungseinrichtung 164 bestromt.

## Patentansprüche

1. Ventilvorrichtung mit einem Ventilgehäuse (10, 54, 94, 166) und darin angeordneten Fluidanschlussstellen (16, 18), die mittels eines entlang seiner Längsachse (24) verschiebbaren Ventilkolbens (22) in seinen verschiedenen Verfahrstellungen miteinander fluidführend verbunden oder voneinander getrennt sind, und mit mindestens einer Rasteinrichtung (26, 28) zum Verrasten des Ventilkolbens (22) in mindestens einer seiner Verfahrstellungen, die fremdkraftbetätigt mit ihren einzelnen Rastmitteln (30, 38, 170) voneinander räumlich verschiedene Raststellungen einnimmt, wobei bezogen auf die Längsachse (24) des Ventilkolbens (22) die einzelnen Rastmittel (30, 38) der Rasteinrichtung (26, 28) sowohl in axialer als auch in radialer Richtung in den einzelnen Raststellungen voneinander verschiedene Positionen einnehmen,
wobei
auf gegenüberliegenden Seiten des Ventilkolbens (22) je eine Rasteinrichtung (26, 28) mit den jeweils zuordenbaren Steuerkörpern (32, *172,* 116, 174) angeordnet ist; **dadurch gekennzeichnet,**
**dass** zum wechselweisen Betätigen der Rasteinrichtung (26, 28) eine Steuerstange (158) als Teil eines Gestängetriebes (146) den Ventilkolben (22) durchgreift.

2. Ventilvorrichtung nach Anspruch 1, **dadurch gekennzeichnet, dass** zum Verfahren der Rastmittel (30, 38, 170) der Rasteinrichtung (26, 28) in ihre voneinander verschiedenen Raststellungen ein Steuerkörper (32, 172) dient, der entlang der Längsachse (24) des Ventilkolbens (22) verfahrbar geführt, mit seinen Steuerflächen (34, 36) die einzelnen Rastmittel (30, 38, 170) ansteuert.

3. Ventilvorrichtung nach Anspruch 2, **dadurch gekennzeichnet, dass** die Steuerflächen (34, 36) des Steuerkörpers (32, 172) einzelne Steuerrampen (44, 46) aufweisen, die ausgehend von dem Ventilkolben (22) bei vorzugsweise gleicher Steigung auf unterschiedlich großen Durchmessern des Steuerkörpers (32, 172) angeordnet sind.

4. Ventilvorrichtung nach Anspruch 2 oder 3, **dadurch gekennzeichnet, dass** für die Fremdkraftbetätigung der Rasteinrichtung (26, 28) der Gestängetrieb (146) dient, der auf den Steuerkörper (32, 172) einwirkt, der zusätzlich unter der Wirkung eines Energiespeichers (112), vorzugsweise in Form einer Druckfeder (114, 176), eine Vorspannung erfährt.

5. Ventilvorrichtung nach einem der vorstehenden Ansprüche, **dadurch gekennzeichnet, dass** für die Ansteuerung des Gestängetriebes (146) mindestens ein bestrombarer Betätigungsmagnet (142, 168) dient.

6. Ventilvorrichtung nach einem der Ansprüche 2 bis 5, **dadurch gekennzeichnet, dass** der Steuerkörper (32, 172) in einem weiteren Steuerkörper (116, 174) geführt ist, die einen Raum (138) miteinander begrenzen, in dem die Rastmittel (30, 38, 170) der Rasteinrichtung (26, 28) auf einem freien Weg von ihrer einen in die andere Raststellung geführt sind, und dass die Länge dieses Weges derart gewählt ist, dass der Ventilkolben (22) eine andere Verfahrstellung einnimmt, bei der die bisher mit Fluid unter vorgebbarem Druck versorgte Anschlussstelle (16, 18) von dieser Druckversorgung gesperrt und eine weitere Anschlussstelle (18, 16) über diese Druckversorgung mit Druckfluid versorgt ist.

7. Ventilvorrichtung nach Anspruch 6, **dadurch gekennzeichnet, dass** die Raststellungen über den freien Weg axial voneinander separiert sind und dass der weitere Steuerkörper (116, 174) auf unterschiedlichen Durchmessern verteilt Anschlagflächen (132, 136) aufweist, die bezogen auf die Längsachse (24) des Ventilkolbens (22) radial voneinander verschieden, mit den Steuerrampen (44, 46) des Steuerkörpers (32, 172) die einzelnen radial voneinander beabstandeten Raststellungen ausbilden.

8. Ventilvorrichtung nach einem der vorstehenden Ansprüche, **dadurch gekennzeichnet, dass** in jeder der gegenüberliegenden Endstellungen des längsverfahrbaren Ventilkolbens (22) die beiden Rasteinrichtungen (26, 28) greifen, die ansonsten den Ventilkolben (22) für seine Verfahrbewegungen zwischen den Endstellungen freigeben.

9. Ventilvorrichtung nach einem der vorstehenden Ansprüche, **dadurch gekennzeichnet, dass** der mehrteilige Gestängetrieb (146) einen weiteren Gestängeteil (150, 180) aufweist, der mit einer stirnseitigen Verbreiterung (154) versehen, am jeweils zuordenbaren Steuerkörper (32, 172) auf einer Seite anliegt, die der Steuerstange (158) benachbart ist, und dass das weitere Gestängeteil (150, 180) zwischen der Steuerstange (158) und einer Betätigungsstange (144, 178) des benachbarten Betätigungsmagneten (142, 168) angeordnet ist.

## Claims

1. Valve apparatus comprising a valve housing (10, 54, 94, 166) and fluid connection points (16, 18) arranged therein, which are placed in fluid communication with one another or disconnected from one another by means of a valve piston (22), which is displaceable along its longitudinal axis (24), in the various travel positions thereof, and comprising at least one latch device (26, 28) for latching the valve piston (22) in at least one of its travel positions, which latch device assumes, in a power-actuated manner, spatially different latching positions by its individual latch means (30, 38, 170), the individual latch means (30, 38) of the latch device (26, 28) assuming different positions from one another in both the axial direction and the radial direction with respect to the longitudinal axis (24) of the valve piston (22) in the individual latching positions, one latch device (26, 28) having the respectively assignable control members (32, 172, 116, 174) being arranged on each opposite side of the valve piston (22), **characterised in that** a control rod (158) as part of a linkage drive (146) penetrates the valve piston (22) in order to selectively actuate the latch device (26, 28).

2. Valve apparatus according to claim 1, **characterised in that**, to move the latch means (30, 38, 170) of the latch device (26, 28) into their different latching positions, a control member (32, 172) is used, which is guided so as to be movable along the longitudinal axis (24) of the valve piston (22) and activates the individual latch means (30, 38, 170) by its control surfaces (34, 36).

3. Valve apparatus according to claim 2, **characterised in that** the control surfaces (34, 36) of the control member (32, 172) have individual control ramps (44, 46) which are arranged, starting from the valve piston (22), with preferably the same gradient at different-size diameters of the control member (32, 172).

4. Valve apparatus according to claim 2 or claim 3, **characterised in that** the linkage drive (146) is used for the power-actuation of the latch device (26, 28) and acts on the control member (32, 172), which is additionally biased under the action of an energy accumulator (112), preferably in the form of a compression spring (114, 176).

5. Valve apparatus according to any of the preceding claims, **characterised in that** at least one energisable actuation solenoid (142, 168) is used to activate the linkage drive (146).

6. Valve apparatus according to any of claims 2 to 5, **characterised in that** the control member (32, 172) is guided in a further control member (116, 174) and, together, they delimit a chamber (138) in which the latch means (30, 38, 170) of the latch device (26, 28) are guided on a free path from one of their latching positions to the other, and **in that** the length of this path is selected such that the valve piston (22) assumes a different travel position in which the connection point (16, 18) that has so far been supplied with fluid under a predeterminable pressure is blocked from said pressure supply and a further connection point (18, 16) is supplied with pressurised fluid by means of said pressure supply.

7. Valve apparatus according to claim 6, **characterised in that** the latching positions are axially separated from one another over the free path, and **in that** the further control member (116, 174) has stop surfaces (132, 136) distributed at different diameters, which stop surfaces differ from one another radially with respect to the longitudinal axis (24) of the valve piston (22) and, together with the control ramps (44, 46) of the control member (32, 172), form the individual, radially spaced-apart latching positions.

8. Valve apparatus according to any of the preceding claims, **characterised in that**, in each of the opposite end positions of the longitudinally movable valve piston (22), the two latch devices (26, 28) engage, and otherwise they release the valve piston (22) for its travel movements between the end positions.

9. Valve apparatus according to any of the preceding claims, **characterised in that** the multi-part linkage drive (146) has a further linkage part (150, 180), which is provided with an end-face enlargement (154) and abuts the respectively assignable control member (32, 172) on one side adjacent to the control rod (158), and **in that** the further linkage part (150, 180) is arranged between the control rod (158) and an actuation rod (144, 178) of the adjacent actuation solenoid (142, 168).

## Revendications

1. Dispositif de soupape comprenant un corps (10, 54, 94, 166) de soupape et des points (16, 18) de raccordement de fluide, qui y sont disposés et qui, au moyen d'un piston (22) de soupape coulissant suivant son axe (24) longitudinal, communiquent fluidiquement entre eux dans ses diverses positions de déplacement ou sont séparés les uns des autres et comprenant au moins un dispositif (26, 28) d'encliquetage pour l'encliquetage du piston (22) de la soupape en au moins l'une de ses positions de déplacement, qui, actionné par une force extérieure, prend par ses divers moyens (30, 38, 170) d'encliquetage, des positions d'encliquetage différentes dans l'espace les unes des autres, dans lequel, rapportés à l'axe (24) longitudinal du piston (22) de la soupape, les divers moyens (30, 38) d'encliquetage du dispositif (26, 28) d'encliquetage prennent, tant dans la direction axiale qu'également dans la direction radiale, des positions différentes les unes des autres dans les divers encliquetages,
dans lequel
sur des faces opposées du piston (22) de la soupape est disposé respectivement un dispositif (26, 28) d'encliquetage ayant les corps (32, 172, 116, 174) de commande pouvant être associés respectivement ;
**caractérisé en ce que**, pour l'actionnement à tour de rôle du dispositif (26, 28) d'encliquetage, une tringle (158) de commande traverse, comme partie d'un mécanisme (146) à tringle, le piston (22) de la soupape.

2. Dispositif de soupape suivant la revendication 1, **caractérisé en ce que**, pour le déplacement des moyens (30, 38, 170) d'encliquetage du dispositif (26, 28) d'encliquetage dans leurs positions d'encliquetage différentes les unes des autres, est utilisé un corps (32, 172) de commande qui, guidé avec possibilité de se déplacer suivant l'axe (24) longitudinal du piston (22) de la soupape, commande par ses surfaces (34, 36) de commande les divers moyens (30, 38, 170) d'encliquetage.

3. Dispositif de soupape suivant la revendication 2, **caractérisé en ce que** les surfaces (34, 36) de commande du corps (32, 172) de commande ont diverses rampes (44, 46) de commande, qui à partir du piston (22) de la soupape, en ayant de préférence de mêmes pentes, sont disposées sur des diamètres de dimension différente du corps (32, 172) de commande.

4. Dispositif de soupape suivant la revendication 2 ou 3, **caractérisé en ce que** sert à l'actionnement par une force extérieure du dispositif (26, 28) d'encliquetage, la transmission (146) à tringle, qui agit sur le corps (32, 172) de commande, lequel subit en outre une précontrainte sous l'effet d'un accumulateur (112) d'énergie, de préférence sous la forme d'un ressort (114, 176) de compression.

5. Dispositif de soupape suivant l'une des revendications précédentes, **caractérisé en ce qu'**au moins un aimant (142, 168) d'actionnement, pouvant être alimenté en courant, sert à la commande du mécanisme (146) à tringle.

6. Dispositif de soupape suivant l'une des revendications 2 à 5, **caractérisé en ce que** le corps (32, 172) de commande est guidé dans un autre corps (116, 174) de commande, qui délimitent entre eux un espace (138), dans lequel les moyens (30, 38, 170) d'encliquetage du dispositif (26, 28) d'encliquetage sont guidés sur un trajet libre de leur une à l'autre position d'encliquetage et **en ce que** la longueur de ce trajet est choisie, de manière à ce que le piston (22) de la soupape prenne une autre position de déplacement, dans laquelle le point (16, 18) de raccordement, alimenté jusqu'ici en fluide sous une pression pouvant être donnée à l'avance, est séparé de cette alimentation en pression et un autre point (18, 16) de raccordement est alimenté en fluide sous pression par cette alimentation en pression.

7. Dispositif de soupape suivant la revendication 6, **caractérisé en ce que** les positions d'encliquetage sur le trajet libre sont séparées les unes des autres axialement et **en ce que** l'autre corps (116, 174) de commande a des surfaces (132, 136) de butée, qui sont réparties sur des diamètres différents et qui, rapportées à l'axe (24) longitudinal du piston (22) de la soupape, sont différentes les unes des autres radialement et forment, avec les rampes (44, 46) de commande du corps (32, 172) de commande, diverses positions d'encliquetage à distance radialement les unes des autres.

8. Dispositif de soupape suivant l'une des revendications précédentes, **caractérisé en ce que** les deux dispositifs (26, 28) d'encliquetage attaquent dans chacune des positions d'extrémité opposées du piston (22) de la soupape déplaçable longitudinalement, en libérant sinon le piston (22) de la soupape pour son mouvement de déplacement entre les positions d'extrémité.

9. Dispositif de soupape suivant l'une des revendications précédentes, **caractérisé en ce que** le mécanisme (146) à tringle en plusieurs parties, a une autre partie (150, 180) de tringle, qui est pourvue d'un élargissement (154) du côté frontal, où s'applique respectivement des corps (32, 172) de commande pouvant être associés d'un côté, qui est voisin de la tringle (158) de commande, et **en ce que** l'autre partie (150, 180) de tringle est disposée entre la tringle (158) de commande et une tringle (144, 178) d'actionnement de l'aimant (142, 168) d'actionnement voisin.
